# EUROPÄISCHE PATENTSCHRIFT

(11) **EP 2 198 588 B1**
(45) Veröffentlichungstag und Bekanntmachung des Hinweises auf die Patenterteilung: **16.05.2012**
(21) Anmeldenummer: 08715936.4
(22) Anmeldetag: 21.02.2008
(51) Int. Cl.: H04L 29/06, A63F 13/12, H04L 29/12, H04L 29/08

(54) **INTERCONNECTION VIRTUELLER WELTEN MIT MOBILEN NACHRICHTENDIENSTEN**
INTERCONNECTION OF VIRTUAL WORLDS BY MEANS OF MOBILE MESSAGE SERVICES
INTERCONNEXION DE MONDES VIRTUELS AU MOYEN DE SERVICES DE MESSAGERIE MOBILE

(30) Priorität: 04.10.2007 DE 102007047632
(43) Veröffentlichungstag der Anmeldung: 23.06.2010
(73) Patentinhaber: Deutsche Telekom AG, 53113 Bonn (DE)
(72) Erfinder: RÖBKE, Matthias, 50859 Köln (DE)
(74) Vertreter: Cohausz Hannig Borkowski Wißgott
(86) Internationale Anmeldenummer: PCT/EP2008/001379
(87) Internationale Veröffentlichungsnummer: WO 2009/046772

(56) Entgegenhaltungen:
- EP-A- 1 475 939
- WO-A-2005/010680
- JOSEF REISINGER ET AL: "Mashing the real world with virtual worlds a monetizing opportunity" INNOVATIONS IN NGN: FUTURE NETWORK AND SERVICES, 2008. K-INGN 2008. FIRST ITU-T KALEIDOSCOPE ACADEMIC CONFERENCE, IEEE, PISCATAWAY, NJ, USA, 12. Mai 2008 (2008-05-12), Seiten 111-116, XP031272287 ISBN: 978-92-61-12441-0

## Beschreibung

Die Erfindung betrifft ein Verfahren zur Konnektierung von Datenverarbeitungsanlagen und/oder von Computernetzwerken, die virtuelle Umgebungen simulieren, mit Kommunikationsdiensten, insbesondere Mobilfunknetzen, insbesondere mobilen Nachrichtendiensten, insbesondere SMS, MMS, IM, Email und dergleichen, zur Ermöglichung einer Kommunikation zwischen Nutzern und/oder Diensten virtueller Umgebungen und Nutzern und/oder Diensten realer, konventioneller Kommunikationsdienste.

Nach Stand der Technik ist es heute möglich, mit Hilfe konventioneller, mobiler Kommunikationsdienste bzw. Nachrichtendienste (SMS, MMS, IM, Email etc.) Daten zwischen Nutzern auszutauschen. Des Weiteren ist auch in "virtuellen Umgebungen" (wie z.B. "Second Life", Cyworld, Habbo etc.) möglich, Nachrichten zwischen Identitäten der virtuellen Umgebung auszutauschen.

Aus EP 1 475 939 ist eine Integration eines Online-Spiels mit einem Instant-Menaging-Programm bekannt.

Derartige virtuelle Welten oder Umgebungen werden auf Datenverarbeitungsanlagen, wie beispielsweise einem Webserver, und/oder auf Computernetzwerken, wie beispielsweise dem Internet, simuliert. Unter dem Begriff der Datenverarbeitungsanlagen und/oder Computernetzwerke sollen auch Teile eines Computernetzwerkes verstanden werden.

### BESTÄTIGUNGSKOPIE

Nach heutigem Stand der Technik ist der Nachrichtenaustausch in der "realen" Welt disjunkt von dem Nachrichtenaustausch in "virtuellen" Umgebungen, d.h. Nutzer, welche sich in einer "virtuellen Umgebung" aufhalten können keine Nachrichten mit Nutzern realer, mobiler Nachrichtendienste wie z.B. MMS, SMS etc. austauschen und vice versa.

Die Aufgabe der Erfindung ist es, eine Methode zur Verfügung zu stellen, welches es erlaubt beide Umgebungen (die virtuelle und die reale) miteinander zu verbinden, um einen Nachrichtenaustausch zu gewährleisten.

Diese Aufgabe wird erfindungsgemäß durch ein Verfahren gemäß Anspruch 1 gelöst.

Besonders vorteilhaft ist bei dem Verfahren zur Konnektierung von Datenverarbeitungsanlagen und/oder von Computernetzwerken, die virtuelle Umgebungen simulieren, mit Kommunikationsdiensten, insbesondere Mobilfunknetzen, insbesondere mobilen Nachrichtendiensten, insbesondere SMS, MMS, IM, Email und dergleichen, zur Ermöglichung einer Kommunikation zwischen Nutzern und/oder Diensten virtueller Umgebungen und Nutzern und/oder Diensten realer, konventioneller Kommunikationsdienste, dass mittels einer Schnittstelle zwischen der virtuellen Umgebung der Datenverarbeitungsanlage und/oder des Computernetzwerkes und dem Kommunikationsdienst eine Konnektierung und eine Zuordnung zwischen Quell- und/oder Zieladresse der virtuellen Umgebung und Quell- und/oder Zieladresse des Kommunikationsdienstes erfolgt und eine Informationsweiterleitung aus der virtuellen Umgebung an einen Kommunikationsdienst und umgekehrt erfolgt.

Die Grundidee der Erfindung beruht darauf, eine Schnittstelle, d.h. ein Interface und die dazugehörigen Methoden zur Verfügung zu stellen, welche es erlauben einen Nachrichtenaustausch zwischen virtuellen Individuen und realen Nutzern eines Nachrichtendienstes (MMS, IM, SMS, CPM) zu realisieren.

Kernelement hierfür ist eine Mediatorfunktion welche beide Welten miteinander verbindet, d.h. die genannte Schnittstelle bildet.

Weitere vorteilhafte Ausgestaltungen der Erfindung sind in den Unteransprüchen angegeben.

Vorzugsweise erfolgt mittels der Schnittstelle eine Adressanpassung, insbesondere eine Anpassung zwischen einem Alias in einer virtuellen Umgebung und einer MSISDN, die einen Benutzer eines Kommunikationsdienstes eindeutig identifiziert.

Vorzugsweise erfolgt mittels der Schnittstelle eine Protokollanpassung, insbesondere eine Anpassung zwischen proprietären Protokollen der virtuellen Umgebung und den Standard-Protokollen, welche in Nachrichtendiensten verwendet werden.

Des weiteren kann mittels der Schnittstelle eine Anpassung von vorliegenden Informationen bezüglich der Anwesenheit von Benutzern einer virtuellen und/oder einer realen Umgebung erfolgen. Auch kann mittels der Schnittstelle eine Anpassung von vorliegenden Informationen bezüglich des Aufenthaltsortes von Benutzern einer virtuellen und/oder einer realen Umgebung erfolgen.

In einer bevorzugten Ausführungsform des erfindungsgemäßen Verfahrens erfolgt mittels der Schnittstelle eine Gebührenabrechnung für die Nutzung von Diensten in einer virtuellen Umgebung und/oder für die Nutzung von Kommunikationsdiensten und/oder für die Nutzung der Schnittstellenfunktion zwischen der virtuellen Umgebung und Kommunikationsdiensten.

Die Schnittstelle kann ihrer logischen Anordnung nach sowohl in der virtuellen Umgebung oder auch in der Domäne eines Kommunikationsdienstes angeordnet sein.

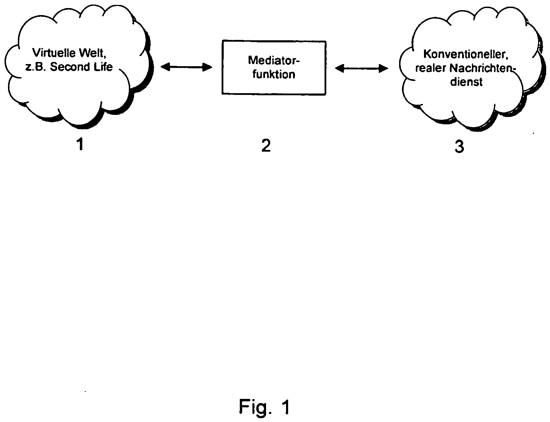

Ein Ausführungsbeispiel der Erfindung ist in Figur 1 schematisch dargestellt und wird nachfolgend erläutert.

Die Grundidee der Erfindung beruht darauf, ein Interface 2, d.h. eine Schnittstelle, und die dazugehörigen Methoden zur Verfügung zu stellen, welche es erlauben einen Nachrichtenaustausch zwischen virtuellen Individuen, d.h. den Benutzer einer virtuellen Welt oder virtuellen Umgebung 1 und realen Nutzern eines Nachrichtendienstes 3, d.h. eines Kommunikationsdienstes wie beispielsweise MMS, IM, SMS, CPM oder dergleichen zu realisieren.

Kernelement hierfür ist eine Mediatorfunktion 2, welche beide Welten 1, 3, d.h. eine virtuelle Umgebung 1 und (reale) Kommunikationsdienste 3, miteinander verbindet.

Mit Hilfe dieser Mediatorfunktion 2 ist ein Individuum, welches sich in einer virtuellen Umgebung 1 bewegt, in der Lage, das gesamte Spektrum realer Nachrichtendienste 3 zu Nutzen (z.B. senden von SMSn an reale Nutzer, Partizipation in realen Chats, Nutzung von CPM Konversationen etc.). Des Weiteren ist es einem virtuellen Individuum 1 möglich Nachrichten etc. von realen Nutzer, konventioneller Nachrichtendienste 3, zu empfangen.

Aufgabe der Mediatorfunktion, d.h. der Schnittstelle 2 ist es, alle Anpassungen, welche notwendig sind um beide Welten oder Umgebungen 1, 3 miteinander zu verbinden, durchzuführen.

Hierzu gehören insbesondere:
- Adressanpassung: z.B. MSISDN -> Alias in virtueller Umgebung 1
- Protokollanpassung: Proprietäre Protokolle der virtuellen Umgebung 1 -> Standard Protokollen, welche in Nachrichtendiensten 3 verwendet werden.
- Anpassung von presence Informationen, d.h. eine Anpassung und/oder Auswertung von vorliegenden Informationen bezüglich der Anwesenheit von Benutzern einer virtuellen Umgebung 1 und/oder einer realen Umgebung 3.
- Anpassung von Location Informationen, d.h. eine Anpassung und/oder Auswertung von vorliegenden Informationen bezüglich des Aufenthaltsortes von Benutzern einer virtuellen Umgebung 1 und/oder einer realen Umgebung 3.

Weiter ist diese Schnittstelleninstanz für ein mögliches Vergebühren von Nachrichten/Dienstleistungen, welche ausgetauscht und/oder in Anspruch genommen werden, verantwortlich.

Die Mediatorfunktion 2 kann sowohl logisch in die Umgebung der "Virtuellen Welt" 1 als auch in der Domäne der anzusprechenden Nachrichtendienste 3 beheimatet sein. Weiter kann die Mediatorfunktion 2 als Eigenständige Instanz aufgebaut sein.

## Patentansprüche

1. Verfahren zur Konnektierung von Datenverarbeitungsanlagen und/oder von Computernetzwerken, die virtuelle Umgebungen (1) simulieren, mit Kommunikationsdiensten (3), zur Ermöglichung einer Kommunikation zwischen Individuen und/oder Diensten in virtuellen Umgebungen (1) und Nutzern und/oder Diensten realer, konventioneller Kommunikationsdienste (3), **dadurch gekennzeichnet, dass** mittels einer Schnittstelle (2) zwischen der virtuellen Umgebung (1) der Datenverarbeitungsanlage und/oder des Computernetzwerkes und dem Kommunikationsdienst (3) eine Konnektierung und eine Zuordnung zwischen Quell- und/oder Zieladresse der virtuellen Umgebung (1) und Quell- und/oder Zieladresse des Kommunikationsdienstes erfolgt und eine Informationsweiterleitung aus der virtuellen Umgebung an einen Kommunikationsdienst (3) und umgekehrt erfolgt.

2. Verfahren nach Anspruch 1, **dadurch gekennzeichnet, dass** mittels der Schnittstelle (2) eine Adressanpassung erfolgt, insbesondere eine Anpassung zwischen einem Alias in einer virtuellen Umgebung (1) und einer MSISDN in einem Mobilfunknetzwerk.

3. Verfahren nach Anspruch 1 oder 2, **dadurch gekennzeichnet, dass** mittels der Schnittstelle (2) eine Protokollanpassung erfolgt, insbesondere eine Anpassung zwischen proprietären Protokollen der virtuellen Umgebung (1) und den Standard-Protokollen, welche in Nachrichtendiensten (3) verwendet werden.

4. Verfahren nach einem der vorherigen Ansprüche, **dadurch gekennzeichnet, dass** mittels der Schnittstelle (2) eine Anpassung und/oder Auswertung von vorliegenden Informationen bezüglich der Anwesenheit von Benutzern einer virtuellen Umgebung (1) und/oder einer realen Umgebung (3) erfolgt.

5. Verfahren nach einem der vorherigen Ansprüche, **dadurch gekennzeichnet, dass** mittels der Schnittstelle (2) eine Anpassung und/oder Auswertung von vorliegenden Informationen bezüglich des Aufenthaltsortes von Benutzern einer virtuellen Umgebung (1) und/oder einer realen Umgebung (3) erfolgt

6. Verfahren nach einem der vorherigen Ansprüche, **dadurch gekennzeichnet, dass** mittels der Schnittstelle (2) eine Gebührenabrechnung für die Nutzung von Diensten in einer virtuellen Umgebung (1) und/oder für die Nutzung von Kommunikationsdiensten (3) und/oder für die Nutzung der Schnittstellenfunktion (2) zwischen der virtuellen Umgebung (1) und Kommunikationsdiensten (3) erfolgt.

7. Verfahren nach einem der vorherigen Ansprüche, **dadurch gekennzeichnet, dass** die Schnittstelle (2) ihrer logischen Anordnung nach in der virtuellen Umgebung (1) oder in der Domäne eines Kommunikationsdienstes (3) angeordnet ist.

8. Verfahren nach einem der vorherigen Ansprüche, **dadurch gekennzeichnet, dass** die Konnektierung der Datenverarbeitungsanlagen und / oder der Computernetzwerke mit Mobilfunknetzen erfolgt.

9. Verfahren nach einem der vorherigen Ansprüche, **dadurch gekennzeichnet, dass** die Konnektierung der Datenverarbeitungsanlage und / oder der Computernetzwerke mit mobilen Nachrichtendiensten, insbesondere SMS, MMS, IM oder E-Mail erfolgt.

## Claims

1. Method for connecting data processing installations and/or computer networks which simulate virtual environments (1) using communication services (3), in order to allow communication between individuals and/or services in virtual environments (1) and users and/or services of real, conventional communication services (3), **characterized in that** an interface (2) between the virtual environment (1) of the data processing installation and/or of the computer network and the communication service (3) is used to connect and associate the source and/or destination address of the virtual environment (1) and the source and/or destination address of the communication service and to forward information from the virtual environment to a communication service (3), and vice versa.

2. Method according to Claim 1, **characterized in that** the interface (2) is used to perform address matching, particularly matching between an alias in a virtual environment (1) and an MSISDN in a mobile radio network.

3. Method according to Claim 1 or 2, **characterized in that** the interface (2) is used to perform protocol matching, particularly matching between proprietary protocols of the virtual environment (1) and the standard protocols that are used in messaging services (3).

4. Method according to one of the preceding claims, **characterized in that** the interface (2) is used to perform matching and/or evaluation of available information regarding the presence of users of a virtual environment (1) and/or of a real environment (3).

5. Method according to one of the preceding claims, **characterized in that** the interface (2) is used to perform matching and/or evaluation of available information regarding the whereabouts of users of a virtual environment (1) and/or of a real environment (3).

6. Method according to one of the preceding claims, **characterized in that** the interface (2) is used to perform billing for the use of services in a virtual environment (1) and/or for the use of communication services (3) and/or for the use of the interface function (2) between the virtual environment (1) and communication services (3).

7. Method according to one of the preceding claims, **characterized in that** the interface (2) is arranged, according to its logical arrangement, in the virtual environment (1) or in the domain of a communication service (3).

8. Method according to one of the preceding claims, **characterized in that** the data processing installations and/or the computer networks are connected using mobile radio networks.

9. Method according to one of the preceding claims, **characterized in that** the data processing installation and/or the computer networks are connected using mobile messaging services, particularly SMS, MMS, IM or e-mail.

## Revendications

1. Procédé pour connecter des systèmes de traitement d'informations et/ou des réseaux d'ordinateurs qui simulent des environnements virtuels (1), comprenant des services de communication (3) pour permettre une communication entre deux individus et/ou services dans des environnements virtuels (1) et des utilisateurs et/ou services de services de communication réels classiques (3), **caractérisé en ce que**, au moyen d'une interface (2) entre l'environnement virtuel (1) du système de traitement de données et/ou du réseau d'ordinateurs et le service de communication (3), il se produit une connexion et une association entre des adresses sources et/ou cibles de l'environnement virtuel (1) et des adresses sources et/ou cibles du service de communication et il se produit un transfert d'informations de l'environnement virtuel vers un service de communication (3) et inversement.

2. Procédé selon la revendication 1, **caractérisé en ce qu'**une adaptation d'adresse est effectuée au moyen de l'interface (2), notamment une adaptation entre un pseudonyme dans un environnement virtuel et un réseau MSISDN (Mobile Station Integrated Services Digital Network, pour Réseau numérique à intégration de services de station mobile) dans un réseau de radiocommunication mobile.

3. Procédé selon la revendication 1 ou 2, **caractérisé en ce qu'**au moyen de l'interface (2), une adaptation de protocole est effectuée, notamment une adaptation entre un protocole propriétaire de l'environnement virtuel (1) et les protocoles normalisés utilisés dans des services de messagerie (3).

4. Procédé selon l'une quelconque des revendications précédentes, **caractérisé en ce qu'**une adaptation et/ou une évaluation d'informations disponibles concernant la localisation d'utilisateurs d'un environnement virtuel (1) et/ou d'un environnement réel (3) sont effectuées au moyen de l'interface (2).

5. Procédé selon l'une quelconque des revendications précédentes, **caractérisé en ce qu'**une adaptation et/ou une évaluation d'informations disponibles concernant la localisation d'utilisateurs d'un environnement virtuel (1) et/ou d'un environnement réel (3) sont effectuées au moyen de l'interface (2).

6. Procédé selon l'une quelconque des revendications précédentes, **caractérisé en ce qu'**une facturation de l'utilisation de services dans un environnement virtuel (1) et/ou de l'utilisation de services de communication (3) et/ou de l'utilisation de la fonction d'interface (2) entre l'environnement virtuel (1) et des services de communication (3) est effectuée au moyen de l'interface (2).

7. Procédé selon l'une quelconque des revendications précédentes, **caractérisé en ce que** l'interface (2) de sa configuration logique est configurée telle qu'elle est dans l'environnement virtuel (1) ou dans le domaine d'un service de communication (3).

8. Procédé selon l'une quelconque des revendications précédentes, **caractérisé en ce que** la connexion des systèmes de traitement de données et/ou des réseaux d'ordinateurs est établie avec des réseaux de radiocommunication mobiles.

9. Procédé selon l'une quelconque des revendications précédentes, **caractérisé en ce que** la connexion des systèmes de traitement de données et/ou des réseaux d'ordinateurs est établie avec des services de messagerie mobile, notamment de services SMS, MMS, IM ou de courrier électronique.
